# EUROPÄISCHE PATENTSCHRIFT

(11) **EP 2 619 485 B1**
(45) Veröffentlichungstag und Bekanntmachung des Hinweises auf die Patenterteilung: **20.04.2016**
(21) Anmeldenummer: 11725780.8
(22) Anmeldetag: 20.06.2011
(51) Int. Cl.: F16H 63/32, F16H 63/20

(54) **SCHALTANORDNUNG EINES ZAHNRÄDERWECHSELGETRIEBES**
SHIFT ARRANGEMENT FOR A GEAR-CHANGE TRANSMISSION
ENSEMBLE EMBRAYAGE POUR UNE TRANSMISSION À ENGRENAGE

(30) Priorität: 21.09.2010 DE 102010046160
(43) Veröffentlichungstag der Anmeldung: 31.07.2013
(73) Patentinhaber: Schaeffler Technologies AG & Co. KG, 91074 Herzogenaurach (DE)
(72) Erfinder: FEUERBACH, Matthias, 97070 Würzburg (DE); LÖFFELMANN, Jochen, 91330 Eggolsheim (DE)
(86) Internationale Anmeldenummer: PCT/EP2011/060229
(87) Internationale Veröffentlichungsnummer: WO 2012/038107

(56) Entgegenhaltungen:
- EP-A1- 2 116 746
- DE-A1- 3 605 015
- US-A- 4 335 623

## Beschreibung

### Gebiet der Erfindung

Die Erfindung betrifft eine Schaltanordnung eines Zahnräderwechseigetriebes, die eine Schaltwelle mit einem Schaltfinger sowie eine Schaltgabel mit einem Schaltmaul aufweist, wobei der Schaltfinger in einen Führungskanal des Schaltmauls in Eingriff bringbar ist, so dass durch ein Verdrehen der Schaltwelle die Schaltgabel bewegbar ist.

### Hintergrund der Erfindung

Schalteinrichtungen, insbesondere für Zahnräderwechselgetriebe, weisen häufig eine Schaltgabel auf, die mit einer Schaltstange verbunden ist. Die Schaltgabel greift in der Regel formschlüssig in eine Schiebemuffe einer Synchronisiereinrichtung ein, mit der über Kuppelelemente Losräder mit einer Haupt-oder Vorgelegewelle kuppelbar sind. Häufig sind die Schaltgabeln drehstarr mit der Schaltstange verbunden. Alternativ dazu kann jedoch eine als Schaltschwinge geschaltete Schaltgabel axial verschiebbar und/oder verdrehbar zu der Schaltstange angeordnet sein. Die Betätigung der Schaltgabel erfolgt dann mittels eines auf einer Schaltwelle angeordneten Schaltfingers, der formschlüssig in ein mit der Schaltgabel verbundenes Schaltmaul eines Schaltarms eingreift und eine Verschiebung der Schaltgabel ermöglicht.

DE 10 2005 052 478 A1 zeigt eine Schaltgabel mit einem Schaltgabelgrundkörper, der ein gedoppeltes Blech aufweist, das die Schaltstange beidseitig radial umfasst. Die Schaltgabel weist ferner ein geschlossenes Schaltmaul auf, das durch zwei deckungsgleiche Durchgangsausnehmungen der Bleche gebildet ist. Nachteilig an dieser Ausbildung ist, dass die beiden Bleche miteinander verbunden werden müssen, was den Herstellungsaufwand und die Masse der gesamten Schaltanordnung erhöht. Weiterhin kann der Schaltfinger bei sehr großen Schaltkräften das Schaltmaul verformen und damit besonders bei Schaltmäulern aus dünnem Material aus diesen ausbrechen, was zu Fehlfunktionen führt. Insbesondere wenn das Schaltmaul ungünstig zu den Lagerstellen der Schaltgabel angeordnet ist, kann sich das Schaltmaul senkrecht zur Schaltrichtung verformen.

DE 10 2008 044 957 A1 zeigt eine Schaltanordnung mit einem Schaltfinger, der seitlich abstehende Schaltarme aufweist. Die Schaltarme greifen beim Schaltvorgang in entsprechende Ausnehmungen, um das Schaltmaul zu verschieben. Der Schaltfinger baut verhältnismäßig lang.

EP 2 116 746 A1 zeigt eine Schaltanordnung gemäß dem Oberbegriff von Anspruch 1, mit S-förmigen Schaltmaulwänden. Beim Schalten gleitet der Schaltfinger an den Schaftmaulwänden entlang, wobei der Kontaktpunkt so wandert, dass der Kraftvektor kein Drehmoment auf den Schaltarm ausübt.

### Aufgabe der Erfindung

Aufgabe der Erfindung ist es, eine kurz bauende, gewichtsreduzierte Schaltanordnung zu schaffen, die einfach herstellbar ist und auch bei ungünstiger Anordnung der Bauteile zueinander den Anforderungen an die aufzunehmenden Kräften genügt.

### Lösung der Aufgabe

Die Aufgabe der Erfindung wird durch eine Schaltanordnung gemäß Anspruch 1 gelöst. Das Schaltmaul der Schaltgabel ist aus einem relativ dünnen Material ausgebildet, das sich bei hohem Lasteintrag verformen kann. Erfindungsgemäß kann sich der Schaltfinger nicht nur seitlich an den Wänden des Führungskanals abstützen, sondern ist zusätzlich an einem Ausbrechen aus dem Führungskanal durch eine Verjüngung in Form einer Einschnürung gesichert. Gleichzeitig ist ein weiteres Verbiegen des Schaltmauls erschwert. Die Erfindung ermöglicht es dadurch, besonders lange und gleichzeitig leicht Schaltarme einzusetzen. Weiterhin eröffnet sie größere Konstruktionsfreiheiten hinsichtlich der Anordnung der Lagerung der Schaltgabel und des Schaltmauls.

In einer Variante ist die Verjüngung als eine Verengung ausgebildet, die durch zwei Vorsprünge gebildet wird. Diese sind vorzugsweise an der offenen, zur Schaltwelle gerichteten Seite des Führungskanals angeordnet und erlauben dem Schaltelement eine relativ große Bewegungsfreiheit.

Der Führungskanal weist in einer Ausbildung der Erfindung einen rechteckigen Querschnitt auf. Seine Ecken können verrundet sein.

Ein Schaltmaul nach der Erfindung lässt sich besonders einfach aus Blech durch Stanzen herstellen.

In einer Ausbildung der Erfindung kann sich die Schaltwelle mit dem Schaltfinger an weiteren Stützstellen des Schaltmauls abstützen. Im Normalfall dagegen ist es von diesen weiteren Stützstellen beabstandet, da die kraftübertragenden Bauteile im Normalbetrieb deutlich geringer belastet sind als bei der einzuhaltenden Maximalbelastung, die vor allem durch Missbrauchskräfte bestimmt ist. Daher kann die Schaltvorrichtung so abgestimmt werden, dass sie unter Standardbetriebsbedingungen ein besonders widerstandsarmes Schalten ermöglicht, während bei besonders hohen Kräften, wie sie beim "Durchreißen" von Gängen auftreten können, ein hoher Komfortanspruch zugunsten der Betriebssicherheit zurückstehen kann.

In einer Ausführungsform weist ein Schaltarm das Schaltmaul auf, das die Schaltwelle radial vollständig umgibt. Der Schaltarm weist also eine Durchgangsausnehmung als Schaltmaul auf, durch die die Schaltwelle geführt ist, wobei ein Teil der Durchgangsausnehmung das Schaltmaul im engeren Sinne bildet.

Besonders vorteilhaft ist es, wenn sich der Schaltarm unter Last so verformt, dass er sich möglichst großflächig abstützen kann. Dazu ist in einer Variante vorgesehen, dass der Schaltarm bei Überlast an mehreren Stützstellen der Schaltwelle bzw. eines mit der Schaltwelle verbundenen Bauteils anliegt Dabei ist es vorteilhaft, wenn diese untereinander gleichmäßig an der Schaltwelle angeordnet sind. Weiterhin ist es von Vorteil, wenn die Innenkontur der Ausnehmung die Außenkontur der Schaltwelle bzw. des Bauteils abbildet.

In einer anderen Variante erfolgt eine Abstützung über einen relativ großen Winkelbereich. Die Stützstellen können dazu als Bereiche ausgebildet sein, in denen der Außenumfang der Schaltwelle komplementär zu der Stützstellenkontur ist. Die örtlich wirkende Last auf das Schaltmaul wird damit großflächiger abgestützt.

Die Verformung des Schaltmauls erfolgt erst bei Überschreiten eines Schwellwertes, wobei sicherzustellen ist, dass die Verformung elastisch erfolgt, also reversibel ist. Dazu sind vorzugsweise die Wandungen des Schaltmauls an den Stützstellen um ein verhältnismäßig kleines Maß X beabstandet, so dass sich das Schaltmaul schon bei geringen Verformungen zuverlässig abstützen kann.

Die Stützstelle ist entweder direkt an der Schaltwelle angeordnet oder auf einem zur Schaltwelle in Schaltrichtung fest, also in aller Regel drehfest, angeordneten Bauteil wie einer Rastierhülse, die die Schaltwelle zylindrisch oder teilzylindrisch umgibt.

In einer Variante der Erfindung sind zwei Stützstellen als in räumlicher Nähe zum Schaltfinger angeordnete Fasen ausgebildet. Eine besonders bevorzugte Ausbildungsform sieht eine Stützstelle vor, die bezüglich der Schaltwelle um 180° versetzt zum Schaltfinger angeordnet ist.

Die Erfindung eignet sich besonders für Schaltarme aus Flachmaterial. Ein Schaltarm lässt sich beispielsweise auf einfache Weise stanzen, wobei gleichzeitig das Schaltmaul in Form einer Ausnehmung in den Schaltarm eingebracht werden kann. Insbesondere bei besonders langen Schaltarmen kann die Erfindung gut eingesetzt werden, da zum einen die Masse des Schaltarms eine verhältnismäßig große Rolle spielt als auch der Schaltarm sich gleichzeitig besonders leicht verformt Daher lässt sich die Erfindung gut bei Schaltanordnungen einsetzten, bei denen der in die Schaltmuffe eingreifende Teil der Schaltgabel um mehr als den vierfachen, insbesondere mehr als den zehnfachen, Durchmesser der Schaltwelle vom Schaltmaul beabstandet ist.

In einer weiteren Ausgestaltung der Erfindung greift das als Schaltfinger ausgebildete Schaltelement beim Schalten über einen Linien- oder Flächenkontakt am Schaltmaul an. Dazu ist der Schaltfinger während des Schaltvorgangs in einem den Schaltfinger beidseitig flankierenden Kanal angeordnet, dessen Wände so auf die Schaltfingerform abgestimmt sind, dass nicht nur eine punktuelle Anlage erfolgt. Alternativ oder zusätzlich sind kanalendseitig Vorsprünge vorgesehen, die ein Ausbrechen des Schaltfingers aus dem Kanal verhindern.

### Kurze Beschreibung der Zeichnungen

Im Folgenden werden Ausführungsbeispiele der Erfindung anhand von Zeichnungen näher erläutert, Dabei zeigen:
- Figur 1: eine Aufsicht auf einen Schaltarm einer Schaltgabel in einer erfindungsgemäßen Schaltanordnung,

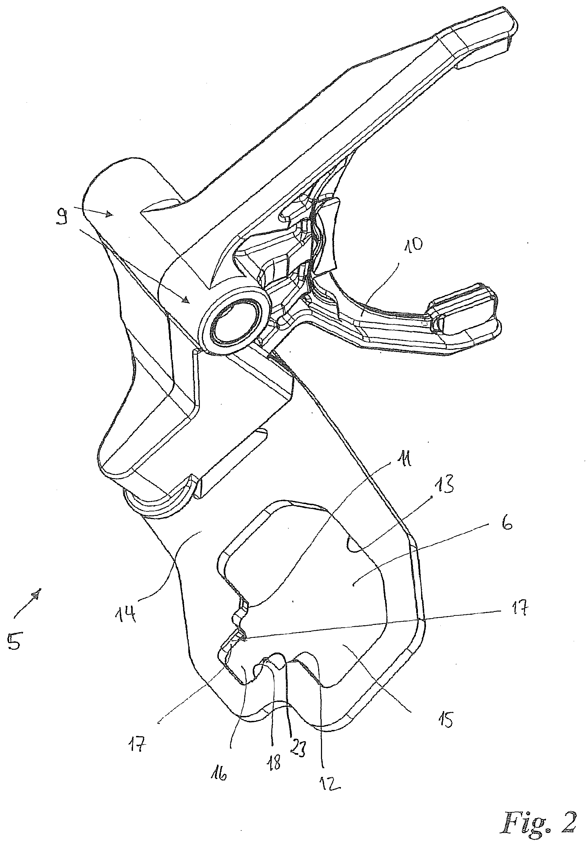

- Figur 2: eine perspektivische Ansicht der Schaltgabel aus Figur 1,
- Figur 3: eine weitere Schaltanordnung mit einer Schaltwelle und einem Schaltmaul einer Schaltgabel in Neutralstellung und
- Figur 4: die Schaltanordnung aus Figur 3 in geschalteter Stellung.

### Ausführliche Beschreibung der Zeichnungen

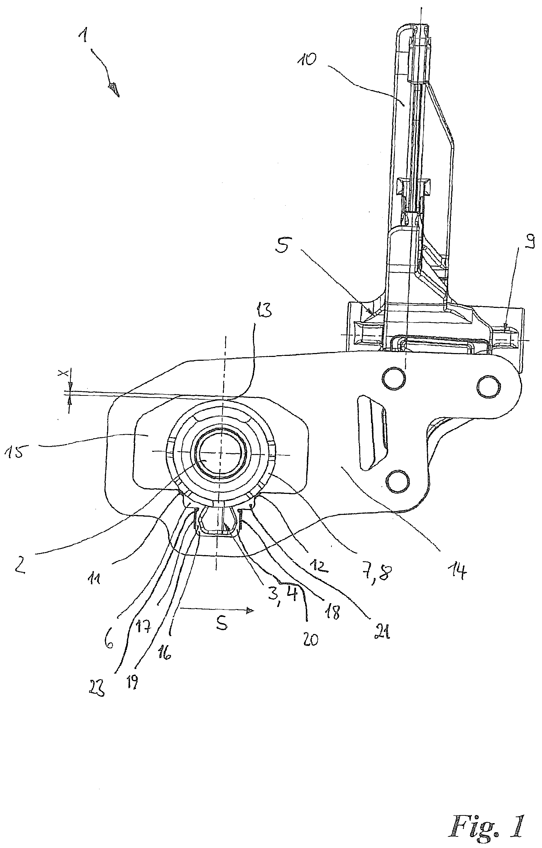

Figur 1 zeigt eine Schaltanordnung 1 mit einer Schaltgabel 5 und einer Schaltwelle 2, auf der ein Bauteil 7 in Form einer Hülse 8 drehfest angeordnet ist. Die Hülse 8 weist einen Schaltfinger 4 als Schaltelement 3 auf, der in ein Schaltmaul 6 der Schaltgabel 5 eingreift. Das Schaltmaul 6 ist als eine Stanzausnehmung in einem Schaltarm 14 ausgebildet. Der Schaltarm 14 ist mit dem Grundkörper 10 verbunden und bildet mit diesem sowie einem Führungsrohr 9 die Schaltgabel 5.

Die Schaltanordnung nach Figur 1 zeigt die Schaltanordnung 1 in Neutralstellung, wobei durch ein Vorwählen der Gasse der Schaltfinger 4 in Axialrichtung der Schaltwelle 2 so positioniert wurde, dass er in der Ebene des Schaltarmes 14 liegt. In dieser Stellung ist er in Schaltrichtung seitlich von Maulwänden 17, 18 eingefasst, aber gleichzeitig durch einen Spalt 19 bzw. 20 um jeweils ein Spiel beabstandet, so dass aufgrund dieses Spiels keine Vibrationen von einer nicht dargestellten Schiebemuffe auf die Schaltwelle 2 übertragen werden.

Das Schaltmaul 6 weist weitere Funktionsflächen 21 auf, die beispielsweise mit einer nicht dargestellten Schaltsperre wechselwirken können. Die Maulwände 17, 18 können zusätzlich nachbearbeitet sein, so dass sie breiter sind als die Blechdicke, oder aber sie sind mit einer Einlegeteil versehen, das aus der Ebene des Schaltarms 14 herausragt und somit eine bessere Abstützung des Schaltfingers 4 ermöglicht. Der Schaltarm weist zwei Fasen 11, 12 auf, wobei zwischen den Fasen 11 bzw. 12 und dem Führungskanal 16 die Funktionsflächen 21 ausgebildet sind und mit einer in dieser Ebene nicht dargestellten Verriegelungseinheit wechselwirken.

Die Stanzausnehmung ist als Fenster 15 nicht kreisförmig ausgebildet, sondern weist eine Stützstelle 13 auf, die so dicht von der Hülse 8 beabstandet sind, dass unter Lasteintrag ein Verformen des Schaltarms 14 dazu führt, dass sich der Schaltarm 14 an der Stützstelle 13 über der Hülse 8 abstützen kann. Dabei ist die Stützstelle 13 bezüglich der Schaltwelle 2 dem Schaltfinger 4 gegenüberliegend angeordnet. Zwischen der Stützstelle 13 und dem Schaltfinger 4 ist das Fenster 15 so ausgebildet, dass der Schaltarm 14 möglichst leicht ist und dennoch die erforderlichen Kräfte übertragen kann.

Die Stützstelle 13 ist um ein vordefiniertes Maß X von der Hülse 8 beabstandet. Das Abstützen an dieser Stützstelle 13 verhindert ein weiteres Verformen senkrecht zur Schaltrichtung. Der kompakte, im Querschnitt in Länge und Breite nur wenig sich unterscheidende Schaltfinger 4 ist in dem Führungskanal 16 angeordnet, dessen Maulwände nicht die Schaltwelle 2, sondern allein den Schaltfinger 4 einfassen.

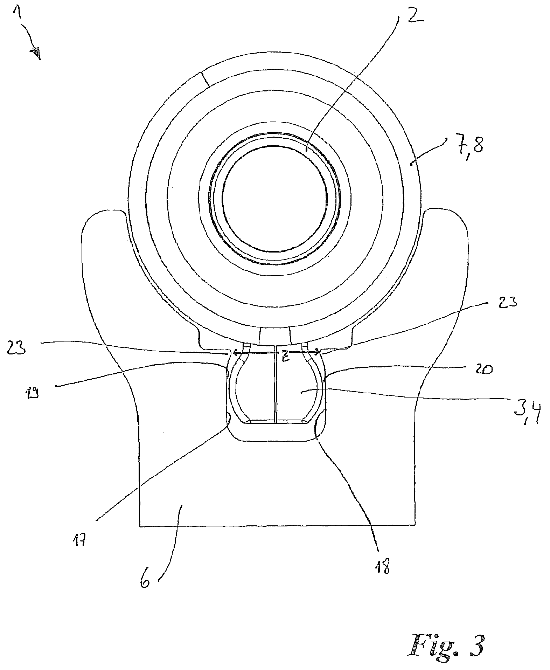

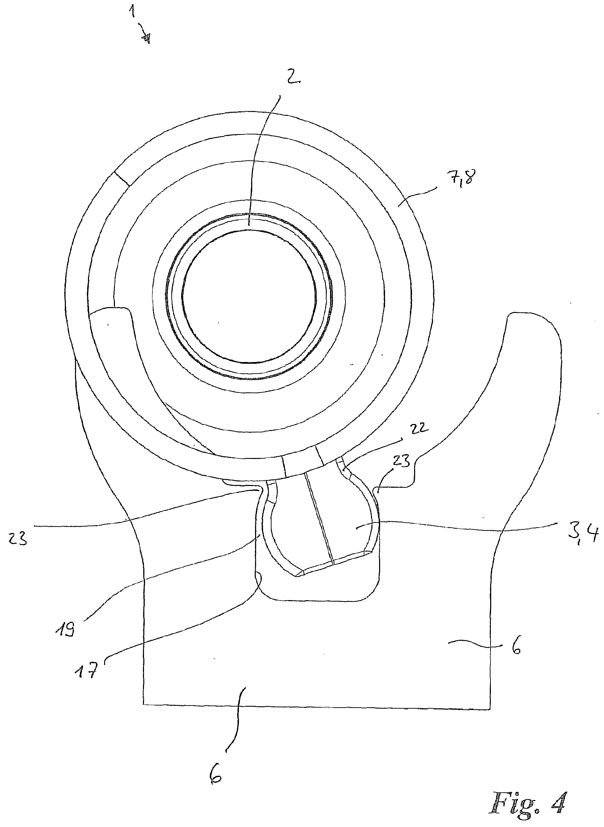

Die Figuren 3 und 4 zeigen ein offenes Schaltmaul 6 als Teil eines nicht weiter dargestellten Schaltarms 14. Das Schaltmaul 6 liegt an der Hülse 8 formschlüssig an bis auf einen mittleren Bereich, in dem es einen zusätzlichen Führungskanal 16 aufweist, in den ein an der Hülse 8 angeordneter Schaltfinger 4 eingreift. Der Schaltfinger 4 ist in der Neutralstellung (Figur 3) von den Maulwänden 17, 18 durch ein Spiel 19, 20 beabstandet. Der Führungskanal 16 weist einen im Wesentlichen rechteckigen Querschnitt mit verrundeten Ecken auf, wobei er zur Schaltwelle 2 gerichtet eine durch Vorsprünge 23 gebildete Einschnürung Z aufweist, um ein Auswandern des Schaltfingers 4 unter Einwirkung großer Kräfte zu verhindern. Die Einschnürung Z ist kleiner als der maximale Schaltfingerdurchmesser und auch kleiner als die Breite des Führungskanals 16. Der Schaltfinger 4 kann sich an den Vorsprüngen 23 auch abstützen.

Der Schaltfinger 4 ist mit einer verrundeten Außenkontur versehen, die beim Schalten an den Maulwänden 17, 18 entlang gleitet. In den Schaltendstellungen beaufschlagt der Schaltfinger 4 leichter verformbare Außenbereiche des Schaltmauls 6. Aufgrund der durch die Vorsprünge 23 gebildeten Einschnürung werden sind erheblich höhere Schaltkräfte für ein Ausbrechen des Schattfingers 4 aus dem Schaltmaul 6 erforderlich. Dennoch kann der Schaltfinger 4 wegen seiner zur Hülse 8 gerichteten Verjüngung 22 weiterhin problemlos axial in das Schaltmaul 6 geführt werden. So weist die Schaltanordnung 1 im Normalbetrieb keine Einschränkungen bezüglich des Schaltkomforts auf und erfordert keine Änderung weiterer Bauteile.

### Liste der Bezugszahlen

- 1: Schaltanordnung
- 2: Schaltwelle
- 3: Schaltelement
- 4: Schaltfinger
- 5: Schaltgabel
- 6: Schaltmaul
- 7: Bauteil
- 8: Hülse
- 9: Führungsrohr
- 10: Grundkörper
- 11: Stützstelle
- 12: Stützstelle
- 13: Stützstelle
- 14: Schaltarm
- 15: Fenster
- 16: Führungskanal
- 17: Maulwand
- 18: Maulwand
- 19: Spalt
- 20: Spalt
- 21: Funktionsfläche
- 22: Verjüngung
- 23: Vorsprung

- S: Schaltrichtung
- X: Maß
- Z: Einschnürung

## Patentansprüche

1. Schaltanordnung (1) eines Zahnräderwechselgetriebes, die eine Schaltwelle (2) mit einem Schaltfinger (4) sowie eine Schaltgabel (5) mit einem Schaltmaul (6) aufweist, wobei der Schaltfinger (4) in einen Führungskanal (16) des Schaltmauls (6) in Eingriff bringbar ist, so dass durch ein Verdrehen der Schaltwelle (2) die Schaltgabel (5) bewegbar ist, wobei der Führungskanal (16) zur Schaltwelle (2) gerichtet eine Einschnürung (Z) aufweist, die kleiner ist als der maximale Durchmesser des Schaltfingers (4), **dadurch gekennzeichnet, dass** die Einschnürung (Z) geartet ist, ein Auswandern des Schaltfingers (4) unter Einwirkung großer Kräfte zu verhindern.

2. Schaltanordnung nach Anspruch 1, **dadurch gekennzeichnet, dass** die Einschnürung (Z) als in den Führungskanal (16) ragende Vorsprünge (23) ausgebildet sind.

3. Schaltanordnung nach Anspruch 1, **dadurch gekennzeichnet, dass** der Führungskanal (16) einen im Wesentlichen rechteckigen Querschnitt aufweist.

4. Schaltanordnung nach Anspruch 1, **dadurch gekennzeichnet, dass** das Schaltmaul (6) aus Flachmaterial ausgebildet ist.

5. Schaltanordnung nach Anspruch 1, **dadurch gekennzeichnet, dass** der Schaltfinger (4) an der Schaltwelle (2) oder an einer auf der Schaltwelle angeordneten Hülse (8) befestigt ist.

6. Schaltanordnung nach Anspruch 1, **dadurch gekennzeichnet, dass** das Schaltmaul (6) die Schaltwelle (2) radial vollständig umschließt.

## Claims

1. Shift arrangement (1) for a gear-change transmission, which arrangement has a selector shaft (2) having a shift finger (4) and has a shift fork (5) having shift jaws (6), wherein the shift finger (4) can be made to engage in a guide channel (16) of the shift jaws (6), thus enabling the shift fork (5) to be moved by rotation of the selector shaft (2), wherein, in the direction of selector shaft (2), wherein, in the direction of the selector shaft (2), the guide channel (16) has a constriction (Z), which is smaller than the maximum diameter of the shift finger (4), **characterized in that** the constriction (Z) is such that it prevents the shift finger (4) from moving out under the action of large forces.

2. Shift arrangement according to Claim 1, **characterized in that** the constriction (Z) is in the form of projections (23) extending into the guide channel (16).

3. Shift arrangement according to Claim 1, **characterized in that** the guide channel (16) has a substantially rectangular cross section.

4. Shift arrangement according to Claim 1, **characterized in that** the shift jaws (6) are formed from flat stock.

5. Shift arrangement according to Claim 1, **characterized in that** the shift finger (4) is attached to the selector shaft (2) or to a sleeve (8) arranged on the selector shaft.

6. Shift arrangement according to Claim 1, **characterized in that** the shift jaws (6) surround the selector shaft (2) completely in the radial direction.

## Revendications

1. Ensemble de commutation (1) pour une boîte de vitesses à engrenages qui présente un arbre de commutation (2) avec un doigt de commande (4) ainsi qu'une fourchette de commutation (5) avec une mâchoire de commutation (6), le doigt de commande (4) pouvant être amené en prise dans un canal de guidage (16) de la mâchoire de commutation (6), de telle sorte que par une rotation de l'arbre de commutation (2), la fourchette de commutation (5) puisse être déplacée, le canal de guidage (16) présentant un rétrécissement (Z) orienté vers l'arbre de commutation (2), qui est inférieur au diamètre maximal du doigt de commande (4), **caractérisé en ce que** le rétrécissement (Z) est réalisé de manière à empêcher que le doigt de commande (4) ne s'écarte sous l'effet de forces élevées.

2. Ensemble de commutation selon la revendication 1, **caractérisé en ce que** le rétrécissement (Z) est réalisé sous forme de saillies (23) pénétrant dans le canal de guidage (16).

3. Ensemble de commutation selon la revendication 1, **caractérisé en ce que** le canal de guidage (16) présente une section transversale essentiellement rectangulaire.

4. Ensemble de commutation selon la revendication 1, **caractérisé en ce que** la mâchoire de commutation (6) est réalisée en un matériau plat.

5. Ensemble de commutation selon la revendication 1, **caractérisé en ce que** le doigt de commande (4) est fixé sur l'arbre de commutation (2) ou sur une douille (8) disposée sur l'arbre de commutation.

6. Ensemble de commutation selon la revendication 1, **caractérisé en ce que** la mâchoire de commutation (6) entoure complètement radialement l'arbre de commutation (2).
